# EUROPÄISCHE PATENTSCHRIFT

(11) **EP 1 238 753 B1**
(45) Veröffentlichungstag und Bekanntmachung des Hinweises auf die Patenterteilung: **16.04.2003**
(21) Anmeldenummer: 01103562.3
(22) Anmeldetag: 19.02.2001
(51) Int. Cl.: B23Q 7/04

(54) **Vorrichtung zum Handhaben von Sägeblättern**
Device for handling saw blades
Dispositif de manipulation pour lames de scie

(43) Veröffentlichungstag der Anmeldung: 11.09.2002
(73) Patentinhaber: VOLLMER WERKE MASCHINENFABRIK GMBH, D-88400 Biberach (DE)
(72) Erfinder: Lenard, Peter, 88400 Biberach/Riss (DE)
(74) Vertreter: Goetz, Rupert, Dipl.-Ing.

(56) Entgegenhaltungen:
- DE-A- 3 121 637
- DE-A- 3 438 915
- US-A- 4 907 834

## Beschreibung

Die Erfindung betrifft eine Vorrichtung nach dem Oberbegriff des Anspruchs 1.

Eine aus DE 31 21 637 A bekannte Vorrichtung dieser Gattung ist zum Halten von stangenförmigen Werkstücken kreisförmigen Querschnitts vorgesehen. Sie hat einen Träger in Form eines Gehäuses mit angebautem Druckfluidzylinder, dessen Achse die Längsachse des Trägers ist. Der Druckfluidzylinder enthält einen Kolben, der durch eine Kolbenstange mit dem Schieber fest verbunden ist. Dieser ist im wesentlichen innerhalb des gehäuseartigen Trägers angeordnet und ragt nur mit einem freien Endbereich durch eine Stirnwand des Trägers nach aussen. Beiderseits des Schiebers ist im Träger je ein zweiarmiger Schwenkkörper gelagert. Jeder dieser Schwenkkörper hat einen äußeren Arm, der durch die genannte Stirnwand des Trägers nach außen ragt, und einen inneren Arm, der mit dem Schieber durch ein Gestänge verbunden ist. Am freien Ende des Schiebers und an den Enden der äußeren Arme der Schwenkkörper ist je eine Rolle gelagert; diese insgesamt drei Rollen sind um je eine zur Längsachse des Trägers normale, zu den Schwenkachsen der Schwenkkörper parallele Drehachse drehbar und definieren eine gemeinsame Mittelachse, von der sie einen durch Verstellen des Schiebers veränderbaren Abstand haben. Die Rollen lassen sich somit, um 60° gegeneinander versetzt, an die zylindrische Mantelfläche eines stangenförmigen Werkstücks anlegen um dieses zu halten. Diese bekannte Vorrichtung ist als Lünette vorgesehen, die beispielsweise auf Drehmaschinen zur zentrierenden Abstützung und Führung von längeren, eingespannten und rotierenden wellenartigen Werkstücken anzuwenden ist.

Der Erfindung liegt die Aufgabe zugrunde, eine Vorrichtung zum Handhaben von Sägeblättern zu schaffen, die wenig Platz beansprucht, sich auf dem jeweils kürzest möglichen Weg zwischen Stapel- und Bearbeitungsstellen für die Sägeblätter bewegen lässt und auch imstande ist, zur Schonung der Sägeblätter beim Stapeln vorgesehene Zwischenscheiben ebenso zeitsparend zu handhaben wie die Sägeblätter selbst.

Die Aufgabe ist erfindungsgemäß mit den Merkmalen des Anspruchs 1 gelöst. Vorteilhafte Weiterbildungen der Erfindung ergeben sich aus den Unteransprüchen.

Ein Ausführungsbeispiel mit weiteren Einzelheiten der Erfindung wird im folgenden anhand schematischer Zeichnungen erläutert; darin ist
- Fig.1: eine Seitenansicht einer erfindungsgemäßen Vorrichtung,
- Fig.2: die Ansicht gemäß Pfeil II in Fig.1,
- Fig.3: ein vergrößerter Ausschnitt aus Fig.2,
- Fig.4: eine der Fig.2 entsprechende Ansicht der Vorrichtung, die jedoch für Sägeblätter größeren Durchmessers eingestellt ist, als in Fig.1 bis 3 dargestellt,
- Fig.5: ein vergrößerter Ausschnitt aus Fig.4,
- Fig.6: die Ansicht gemäß Pfeil VI in Fig.5, weiter vergrößert,
- Fig.7: ein teilweise als Schnitt VII-VII in Fig.5 stark vergrössert gezeichneter Bereich der Vorrichtung in unbenutztem Zustand,
- Fig.8: den selben Bereich beim Tragen eines Sägeblattes,
- Fig.9: ein teilweise als Schnitt IX-IX in Fig.5 stark vergrößert gezeichneter weiterer Bereich der Vorrichtung in unbenutztem Zustand und
- Fig.10: der selbe Bereich wie in Fig.9, jedoch beim Tragen einer Zwischenscheibe.

Die dargestellte Vorrichtung hat die Aufgabe, Kreissägeblätter, die im folgenden kurz als Sägeblätter 10 bezeichnet werden, sowie zu deren Schonung vorgesehene, nichtmetallische Zwischenscheiben 12 einzeln beispielsweise von einem nicht dargestellten Stapeldorn abzuziehen, die Zwischenscheiben 12 auf einem gesonderten Dorn zu lagern und die Sägeblätter 10 nacheinander einer oder mehreren Bearbeitungsmaschinen zuzuführen und sie anschließend wieder auf einem Stapeldorn zu stapeln.

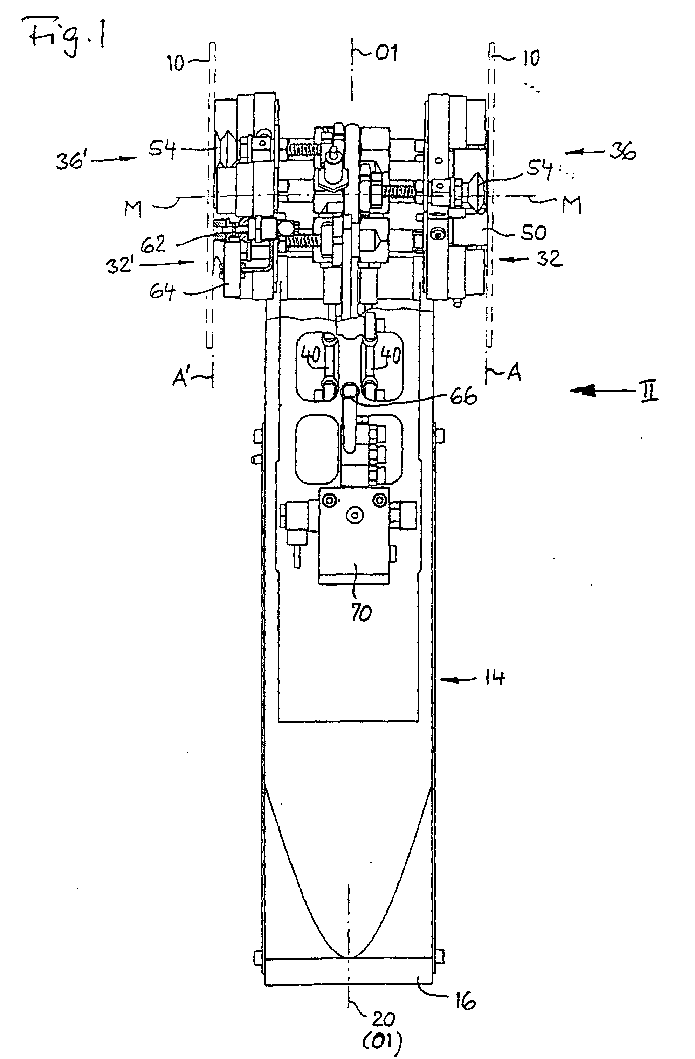

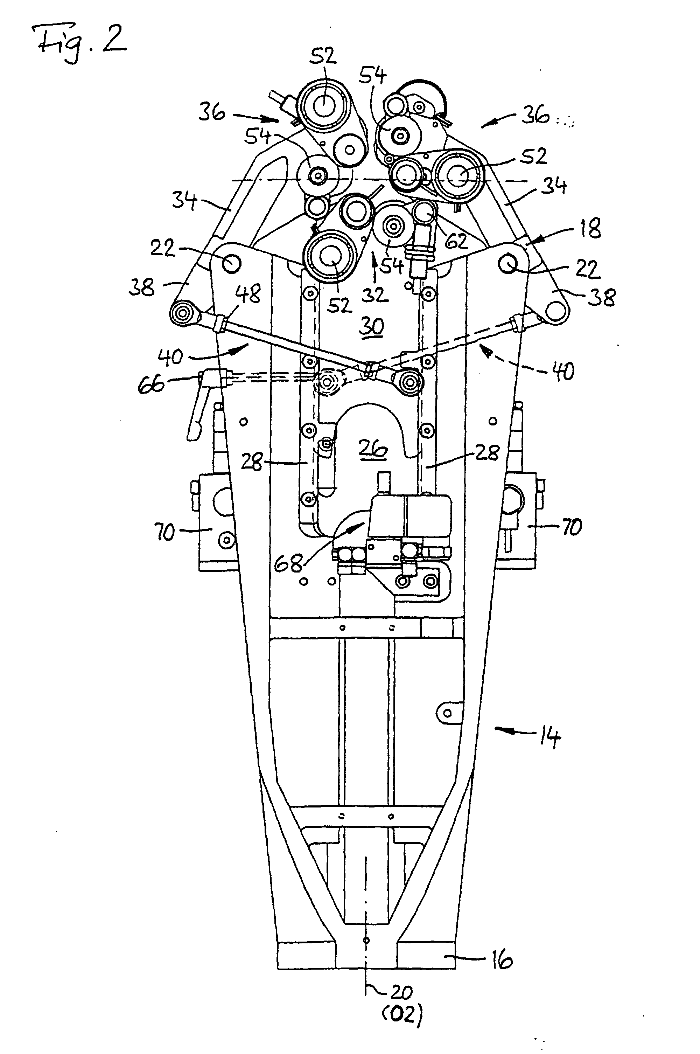

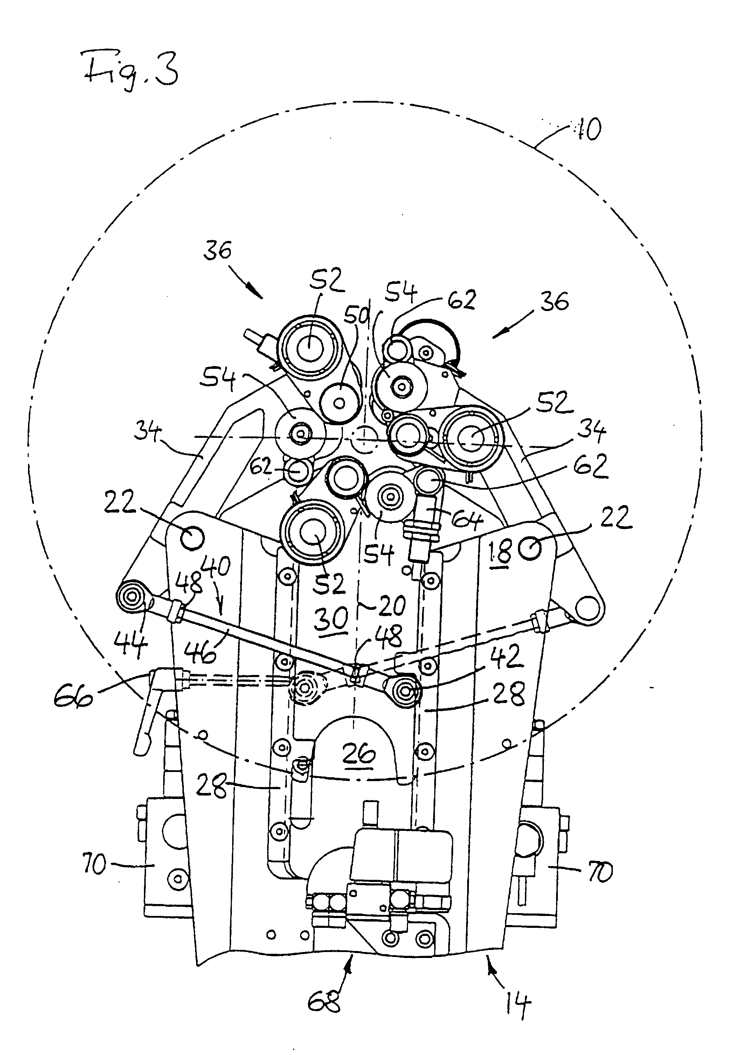

Tragendes Bauteil der dargestellten Vorrichtung ist ein Träger 14 mit einem in Fig.1, 2 und 4 unten angeordneten Endbereich 16, mit dem der Träger in nicht dargestellter Weise an einem Fahrwerk oder einer Mehrgelenkanordnung eines Roboters oder an einer Sägenbearbeitungsmaschine gelagert sein kann. Dem gelagerten Endbereich 16 gegenüber hat der Träger 14 einen freien Endbereich 18; zwischen diesen beiden Endbereichen 16 und 18 erstreckt sich eine Längsachse 20, die als Schnittlinie zweier zueinander orthogonaler Symmetrieebenen O1 und 02 betrachtet werden kann, in bezug auf die der Träger 14, und die dargestellte Vorrichtung insgesamt, im wesentlichen symmetrisch ist. Mittels eines nicht dargestellten Antriebs läßt sich der Träger 14 um seine Längsachse 20 um jeweils 180° hin- und herdrehen.

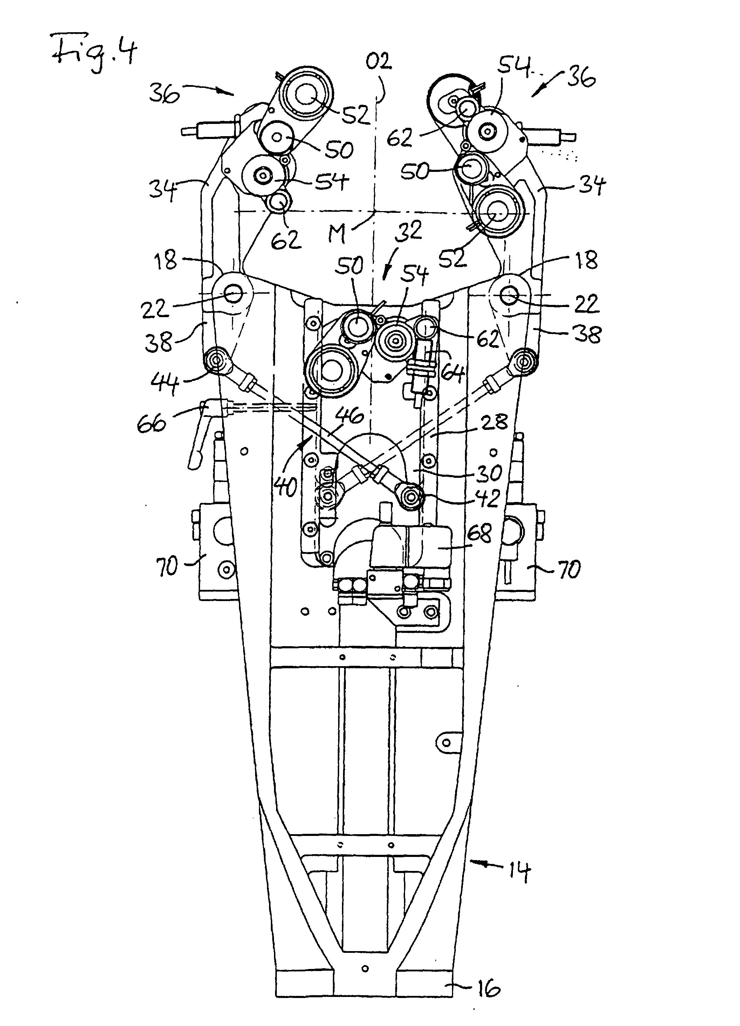

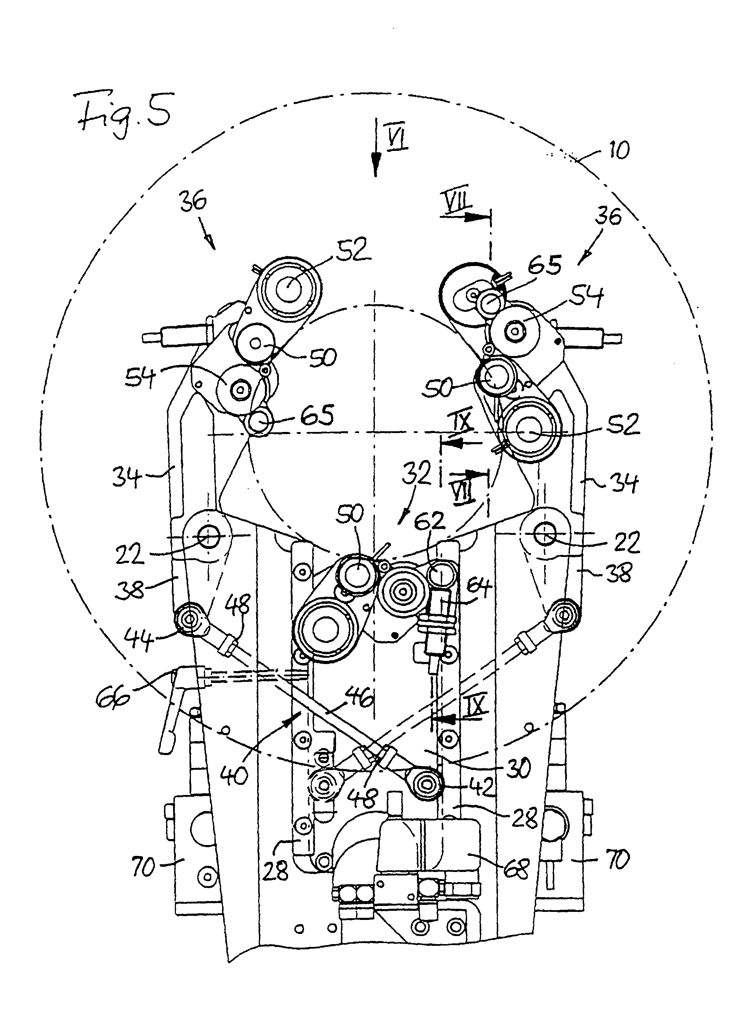

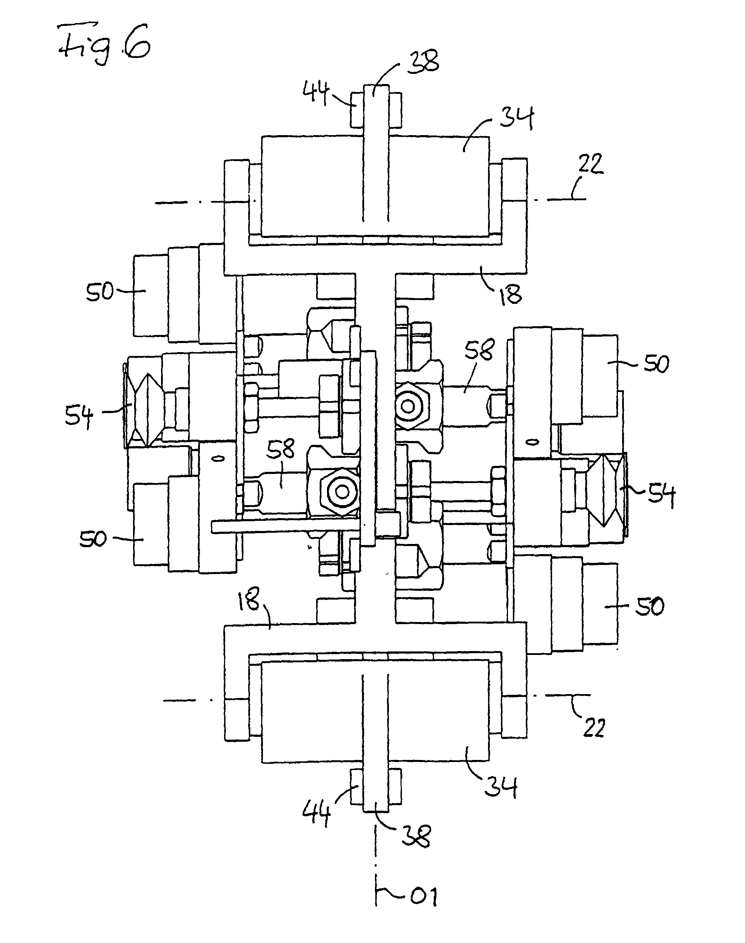

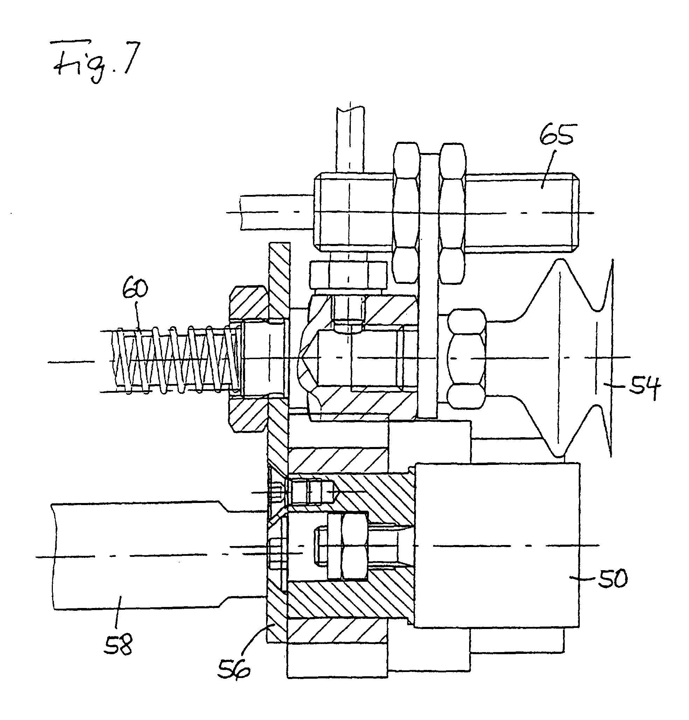

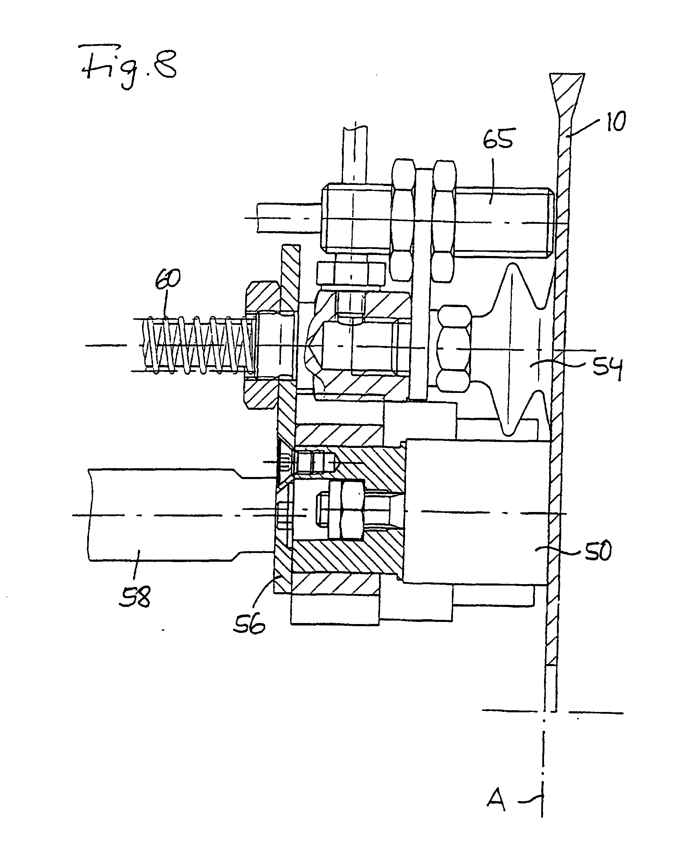

In seinem freien Endbereich 18 weist der Träger 14 zwei Schwenkachsen 22 auf, die auf je einer Seite der zur Zeichnungsebene der Fig.2 bis 5 orthogonalen, die Längsachse 20 enthaltenden Symmetriebene 02 parallel zu dieser und rechtwinklig zur Längsachse 20 angeordnet sind. Zwischen den beiden Schwenkachsen 22 weist der Träger 14 eine an seinem freien Endbereich 18 offene, im wesentlichen rechteckige Aussparung 26 auf, an deren zur Längsachse 20 parallelen Rändern Führungen 28 für einen Schieber 30 ausgebildet sind.

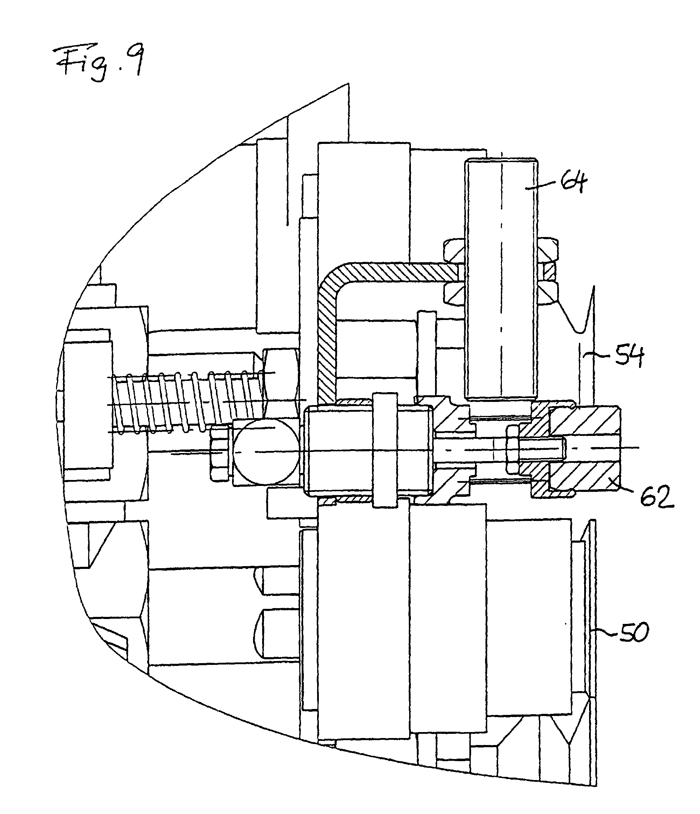

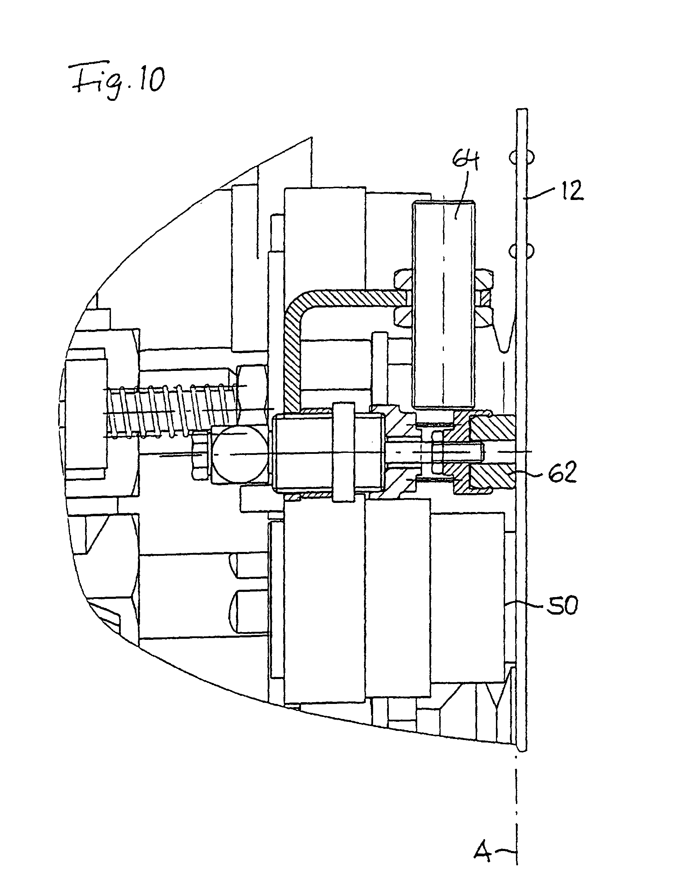

Der Schieber 30 ist in Richtung der Längsachse 20 stufenlos verschiebbar zwischen einer in Fig.1 bis 3 abgebildeten ausgefahrenen Stellung, in der er deutlich über den freien Endbereich 18 des Trägers 14 hinausragt, und einer in Fig.4 und 5 abgebildeten zurückgezogenen Stellung, in der er vollständig in der Aussparung 26 aufgenommen ist. Das Verstellen des Schiebers 30 kann unmittelbar oder beispielsweise über einen Gewindetrieb von Hand geschehen, kann aber auch mechanisiert und darüber hinaus automatisiert werden, wenn Sägeblätter 10 unterschiedlichen Durchmessers unmittelbar aufeinanderfolgend oder in unregelmäßiger Folge zu handhaben sind.

Der Schieber 30 trägt an seiner dem Betrachter der Fig.2 bis 5 zugewandten, in Fig.1 rechten Seite sowie-an seiner gegenüberliegenden Seite je einen ersten Haltekopf 32 bzw. 32'. Am freien Endbereich 18 des Trägers 14 sind zwei Schwenkkörper 34 um je eine der beiden Schwenkachsen 22 schwenkbar gelagert, und diese beiden Schwenkkörper tragen an ihrer dem Betrachter der Fig.2 bis 5 zugewandten Seite sowie an ihrer gegenüberliegenden Seite je einen weiteren Haltekopf 36 bzw. 36'. Jeder der Schwenkkörper 34 hat einen in Richtung von seinen Halteköpfen 36 und 36' weg jenseits der zugehörigen Schwenkachse 22 wegragenden Arm 38. Die beiden Arme 38 sind durch je eine Stange 40 gelenkig mit dem Schieber 30 derart verbunden, daß die Schwenkkörper 34 zueinander hin geschwenkt werden, wenn der Schieber 30 zum freien Endbereich 18 oder darüber hinaus verschoben wird, und umgekehrt.

Die beiden Stangen 40 sind so angeordnet, daß sie in der Ansicht gemäß Fig.2 bis 5 einander kreuzen, ohne einander zu berühren, wie aus Fig.1 ersichtlich ist. Jede der beiden Stangen 40 hat ein am Schieber 30 gelagertes Lagerteil 42, ein am zugehörigen Arm 38 gelagertes Lagerteil 44 und ein Mittelteil 46, das an einem seiner beiden Enden ein in das Lagerteil 42 eingeschraubtes Rechtsgewinde, und an seinem anderen Ende ein in das Lagerteil 44 eingeschraubtes Linksgewinde aufweist. Infolge dessen ist jede der beiden Stangen 40 in der Art eines Spannschlosses längeneinstellbar. Auf die Gewinde des Mittelteils 46 ist je eine Kontermutter 48 zum Fixieren der gewählten Einstellung aufgeschraubt.

Der Haltekopf 32 am Schieber 30 und die Halteköpfe 36 an den beiden Schwenkkörpern 34 sind so angeordnet, daß sie eine gemeinsame, zu den Schwenkachsen 22 normale Arbeitsebene A definieren; in entsprechender Weise sind die Halteköpfe 32' und 36' am Schieber 30 bzw. an den beiden Schwenkkörpern 34 so angeordnet, daß sie eine gemeinsame, zu den Schwenkachsen 22 normale Arbeitsebene A' definieren. Die Länge jeder der beiden Stangen 40 ist so eingestellt, daß jeder der am Schieber 30 angeordneten ersten Halteköpfe 32 und 32' sowie die an den Schwenkkörpern 34 angeordneten weiteren Halteköpfe 36 und 36' in jeder möglichen Stellung des Schiebers 30 gleich weit von einer virtuellen Mittelachse M entfernt sind, die sich parallel zu den Schwenkachsen 22 erstreckt und die Längsachse 20 deutlich außerhalb des Trägers 14, in einem erheblichen Abstand von dessen freiem Endbereich 18, unter einem rechten Winkel schneidet. In jeder der Arbeitsebenen A und A' läßt sich wahlweise ein Sägeblatt 10 oder eine Zwischenscheibe 20 an die zusammengehörigen Haltekopfe 32 und 34 bzw. 32' und 34' anlegen, wie in Fig.1 angedeutet und in Fig.8 für ein Sägeblatt 10 sowie in Fig.10 für eine Zwischenscheibe 12 deutlicher dargestellt ist.

Die Haltekopfe 32 und 32' sowie 36 und 36' gleichen einander weitgehend und werden insoweit gemeinsam beschrieben. Zu jedem Haltekopf gehört je ein erster Magnet 50, ein zweiter Magnet 52 und ein Sauger 54, die an einer gemeinsamen Platte 56 befestigt sind. Die beiden Magneten 50 und 52 dienen dazu, ein Sägeblatt 10 am betreffenden Haltekopf festzuhalten. Vorzugsweise sind sämtliche Magnete 50 und 52 Dauermagnete und nicht Elektromagnete, damit ihre Haftkraft von einem etwaigen elektrischen Spannungsausfall unabhängig ist. Zweckmäßiger Weise sind den Magneten 50 und 52 jedoch elektrische Wicklungen zugeordnet, die unter Spannung gesetzt werden können, um die Magnethaftkraft aufzuheben und somit ein bisher festgehaltenes Sägeblatt 10 freizugeben. Zum Handhaben kleiner und entsprechend leichter Sägeblätter läßt sich der zweite Magnet 52 an jedem Haltekopf 32, 32', 36 und 36' in eine Stellung bewegen, in der er unwirksam ist.

Die Sauger 34 lassen sich zum Erfassen und Transportieren einer Zwischenscheibe 12 aktivieren, indem sie an einen Unterdruckerzeuger angeschlossen werden. Die Platte 56 jedes Haltekopfes 32, 32', 36 und 36' ist zur zugehörigen Arbeitsebene A bzw. A' im wesentlichen parallel und ist an einem Paar Bolzen 58 befestigt, die sich parallel zur Mittelachse M, also auch zu den Schwenkachsen 22, erstrecken und am Schieber 30 bzw. am zugehörigen Schwenkkörper 34 begrenzt verschiebbar geführt sind. Jede der Platten 56 ist durch mindestens eine Feder 60 in Richtung von der Symmetrieebene O1 (Fig.1) weg vorgespannt.

Mindestens einem der Halteköpfe 32, 32', 36 und 36', im dargestellten Beispiel nur den Halteköpfen 32 und 32' am Schieber 30, ist ferner ein pneumatisch betätigbarer Abdrücker 62 zugeordnet, der normalerweise eine Ruhestellung gemäß Fig.9 einnimmt, in der er über die zugehörige Arbeitsebene A bzw. A' hinausragt. Aus dieser Ruhestellung wird der Abdrücker 62 in Richtung zur Symmetrieebene O1 hin verdrängt, wenn gemäß Fig.7 ein Sägeblatt 10 magnetisch oder gemäß Fig.10 eine Zwischenscheibe 12 pneumatisch vom betreffenden Haltekopf erfaßt wird. Dem Abdrücker 62 ist ein Sensor 64, beispielsweise ein induktiver Näherungsschalter, zugeordnet, der in der Stellung gemäß Fig.10 ein Signal abgibt, das zu erkennen gibt, daß entweder eine Zwischenscheibe 12 oder ein Sägeblatt 10 (Fig.8) festgehalten wird.

Anhand dieses Signals läßt sich allerdings noch nicht unterscheiden, ob der festgehaltene Gegenstand ein Sägeblatt 10 oder eine Zwischenscheibe 12 ist. Für eine solche Unterscheidung ist an mindestens einem von je drei zusammengehörigen Halteköpfen 32 und 36 bzw. 32' und 36', vorzugsweise an jedem der an einem der Schwenkkörper 34 angeordneten Halteköpfe 36 und 36', ein zusätzlicher Sensor 65 vorgesehen, zweckmäßiger Weise ebenfalls in Form eines induktiven Näherungsschalters, der ein Signal nur dann abgibt, wenn der festgehaltene Gegenstand ein Sägeblatt 10 ist.

Im dargestellten Beispiel ist vorgesehen, den Schieber 30, und somit auch die beiden Schwenkkörper 34 bei Bedarf, also zur Anpassung an Sägeblätter 10 unterschiedlichen Durchmessers, von Hand zu verstellen. Wie dies im einzelnen geschieht, ist gleichgültig. Beispielsweise kann man den Schieber 30 längs seiner Führungen 28 verschieben, womit zwangsläufig eine entsprechende Schwenkung der beiden Schwenkkörper 34 verbunden ist, oder man kann umgekehrt die beiden Schwenkkörper 34 zueinander hin oder voneinander weg schwenken, womit zwangsläufig eine entsprechende Verschiebung des Schiebers 30 verbunden ist. Die solchermaßen erreichte Einstellung des Schiebers 30 und der beiden Schwenkkörper 34 läßt sich beispielsweise dadurch sichern, daß der Schieber 30 mittels eines Klemmkörpers 66 in seiner Führung 28 festgesetzt wird. Ein solcher Klemmkörper 66 in Gestalt einer mit Handgriff versehenen Klemmschraube ist in Fig.1 bis 5 dargestellt.

Ein Festklemmen des Schiebers 30 in der jeweils gewählten Stellung ist entbehrlich, wenn zum Verstellen des Schiebers ein selbsthemmender, manuell oder motorisch betätigbarer Antrieb, beispielsweise mit einer Gewindespindel, vorgesehen ist.

Zum Aktivieren der Sauger 54 sind ein Vakuumerzeuger 68 und Ventile 70 vorgesehen, die am Träger befestigt sind.

Um ein Sägeblatt 10 freizugeben, werden die es bis dahin festhaltenden Magneten 50 und 52 deaktiviert und zusätzlich wird der an diesem Sägeblatt anliegende Abdrücker 62 pneumatisch ausgefahren, so daß das Sägeblatt von den Magneten 50 und 52 weggedrückt wird. Etwa noch bestehende Haftkräfte, die auch von einem Ölfilm auf dem Sägeblatt 10 stammen können, werden also mit Sicherheit überwunden.

## Patentansprüche

1. Vorrichtung zum Handhaben von Werkstücken, mit
- einem beweglichen Träger (14), der eine Längsachse (20) definiert,
- einem Schieber (30), der am Träger (14) entlang der Längsachse (20) verstellbar ist,
- einem Haltekopf (32) am Schieber (30), und zwei weiteren Halteköpfen (36), die an je einem von zwei Schwenkkörpern (34) angeordnet sind, wobei
- diese insgesamt drei Halteköpfe (32,36) eine gemeinsame, zur Längsachse (20) parallele Arbeitsebene (A) definieren, in der sie ein Werkstück zu halten vermögen,
- die drei Halteköpfe (32,36) in jeweils annähernd gleichen radialen Abständen rings um eine Mittelachse (M) angeordnet sind, die außerhalb eines freien Endbereichs (18) des Trägers (14) angeordnet ist, sich normal zur Arbeitsebene (A) erstreckt und die gewünschte Lage der Achse des Sägeblattes (10) definiert,
- die Schwenkkörper (34) am freien Endbereich (18) des Trägers (14) um je eine von zwei Schwenkachsen (22) schwenkbar gelagert sind, die sich auf je einer Seite der Längsachse (20) parallel zur Mittelachse (M) erstrecken, und
- der Schieber (30) mit den Schwenkkörpern (34) durch ein Getriebe zu zwangsweise gemeinsamer Bewegung sämtlicher Halteköpfe (32,36) zur Mittelachse (M) hin und von ihr weg verbunden ist,
**dadurch gekennzeichnet, daß** am Schieber (30) und an den beiden Schwenkkörpern (34) je zwei voneinander abgewandte Halteköpfe (32,32';36,36') angeordnet sind, so daß auf zwei voneinander abgewandten Seiten des Trägers (14) Wahlweise je ein Sägeblatt (10) als Werkstück oder eine beim Stapeln von Sägeblättern (10) verwendete Zwischenscheibe (12) aufnehmbar ist.

2. Vorrichtung nach Anspruch 1,
**dadurch gekennzeichnet, daß** das Getriebe zwei Stangen (40) umfaßt, die den Schieber (30) mit je einem der beiden Schwenkkörper (34) verbinden.

3. Vorrichtung nach Anspruch 2,
**dadurch gekennzeichnet, daß** die Schwenkkörper (34) je einen vom zugehörigen Haltekopf (36) weg über die zugehörige Schwenkachse (22) hinausragenden Arm (38) aufweisen, an dem die zugehörige Stange (40) angelenkt ist.

4. Vorrichtung nach Anspruch oder 3,
**dadurch gekennzeichnet, daß** die Stangen (40) längeneinstellbar sind.

5. Vorrichtung nach einem der Ansprüche 1 bis 4,
**dadurch gekennzeichnet, daß** jeder Haltekopf (32,36) mindestens einen Magneten (50) zum Festhalten eines Sägeblattes (10) aufweist.

6. Vorrichtung nach einem der Ansprüche 1 bis 5,
**dadurch gekennzeichnet, daß** jeder Haltekopf (32,36) einen Sauger (54) zum Festhalten einer Zwischenscheibe (12) aufweist.

7. Vorrichtung nach einem der Ansprüche 1 bis 6,
**dadurch gekennzeichnet, daß** mindestens einer der Halteköpfe (32,36) einen Abdrücken (62) zum Abdrücken eines Sägeblattes (10) aufweist.

8. Vorrichtung nach Anspruch 7,
**dadurch gekennzeichnet, daß** mindestens ein mit einem Abdrücken (62) versehener Haltekopf (32) einen Sensor (64) aufweist, der die Stellung des Abdrückers (62) überwacht.

9. Vorrichtung nach einem der Ansprüche 1 bis 8,
**dadurch gekennzeichnet, daß** mindestens einer der Halteköpfe (32,36) einen Sensor (64) aufweist, der zwischen einem Sägeblatt (10) und einer Zwischenscheibe (12) zu unterscheiden vermag.

## Claims

1. A device for handling workpieces, comprising
- a movable carrier (14) defining a longitudinal axis (20);
- a slide (30) adjustable on the carrier (14) along the longitudinal axis (20);
- a retaining head (32) on the slide (30) and two further retaining heads (36) which are arranged on one of two swivelling members (34) each, wherein
- the said three retaining heads (32, 36) in all define a common working plane (A) parallel to the longitudinal axis (20) in which they are in a position to retain a workpiece;
- the three retaining heads (32, 36) are arranged at approximately equal radial distances around a centre axis (M) which is arranged outside of a free end region (18) of the support (14), extends normal to the working plane (A), and defines the desired position of the axis of the saw blade (10);
- the swivelling members (34) are supported on the free end region (18) of the support (14) to swivel about one of two swivel axes (22) each which extend on one side of the longitudinal axis (20) each, parallel to the centre axis (M); and
- the slide (30) is connected with the swivelling members (34) by a gearing for forced common movement of all retaining heads (32, 36) toward and away from the centre axis (M),
**characterised in that** two oppositely oriented retaining heads (32, 32'; 36, 36') each are arranged on the slide (30) and on the two swivelling members (34), respectively, so that on two oppositely oriented sides of the support (14) optionally one saw blade (10) each as workpiece or one washer (12) used when stacking saw blades (10) can be accommodated.

2. The device according to claim 1,
**characterised in that** the gearing comprises two rods (40) connecting the slide (30) with one of the two swivelling members (34) each.

3. The device according to claim 2,
**characterised in that** each one of the swivelling members (34) comprises an arm (38) that projects away from the associated retaining head (36) beyond the associated swivel axis (22) and to which the associated rod (40) is linked.

4. The device according to claim 2 or 3,
**characterised in that** the rods (40) are adjustable in length.

5. The device according to one of claims 1 to 4,
**characterised in that** each retaining head (32, 36) comprises at least one magnet (50) for retaining a saw blade (10).

6. The device according to one of claims 1 to 5,
**characterised in that** each retaining head (32, 36) comprises a suction element (54) for retaining a washer (12).

7. The device according to one of claims 1 to 6,
**characterised in that** at least one of the retaining heads (32, 36) comprises a separating means (62) for separating a saw blade (10).

8. The device according to claim 7,
**characterised in that** at least one retaining head (32) provided with a separating means (62) comprises a sensor (64) monitoring the position of the separating means (62).

9. The device according to one of claims 1 to 8,
**characterised in that** at least one of the retaining heads (32, 36) comprises a sensor (64) which is adapted to differentiate between a saw blade (10) and a washer (12).

## Revendications

1. Appareil pour la manutention de pièces à oeuvrer, comprenant :
- un support mobile (14) qui définit un axe longitudinal (20),
- un coulisseau (30), déplaçable en translation sur le support (14) le long de l'axe longitudinal (20),
- une tête de maintien (32) sur le coulisseau (30), et deux autres têtes de maintien (36), lesquelles sont agencées chacune sur un corps respectif parmi deux corps basculants (34),
dans lequel :
- lesdites trois têtes de maintien (32, 36) au total définissent un plan de travail commun (A) parallèle à l'axe longitudinal (20) dans lequel elles sont capables de retenir une pièce à oeuvrer,
- les trois têtes de maintien (32, 36) sont agencées tout autour d'un axe médian (M) à des distances radiales respectives approximativement égales, ledit axe médian étant agencé à l'extérieur d'une zone terminale libre (18) du support (14), s'étendant perpendiculairement au plan de travail (A) et définissant la position souhaitée de la lame de scie (10) ou respectivement de la plaque intermédiaire (12),
- les corps basculants (34) sont montés à la zone terminale libre (18) du support (14) avec faculté de basculement respectivement autour de l'un parmi deux axes de basculement (22) qui s'étendent parallèlement à l'axe médian (M) et chacun sur un côté de l'axe longitudinal (20), et
- le coulisseau (30) est relié au corps basculant (34) par un mécanisme en vue d'un déplacement commun forcé de la totalité des têtes de maintien (32, 36) en direction de l'axe médian (M) et en éloignement de celui-ci,
**caractérisé en ce que** deux têtes de maintien respectives (32, 32' ; 36, 36') détournées l'une de l'autre sont agencées sur le coulisseau (30) et sur les deux corps basculants (34), de sorte que sur deux côtés détournés l'un de l'autre du support (14) il est possible de recevoir au choix à titre de pièce à oeuvrer une lame de scie respective (10), ou une plaque intermédiaire (12) utilisée pour empiler des lames de scie (10).

2. Appareil selon la revendication 1, **caractérisé en ce que** le mécanisme comprend deux tiges (40) qui relient le coulisseau (30) à l'un des deux corps basculants respectifs (34).

3. Appareil selon la revendication 2, **caractérisé en ce que** les corps basculants (34) comprennent chacun un bras (34) qui dépasse de la tête de maintien associée (36) et au-delà de l'axe de basculement associé (22), bras sur lequel est articulée la tige respective (40).

4. Appareil selon l'une ou l'autre des revendications 2 et 3, **caractérisé en ce que** les tiges (40) sont réglables en longueur.

5. Appareil selon l'une des revendications 1 à 4, **caractérisé en ce que** chaque tête de maintien (32, 36) comprend au moins un aimant (50) pour immobiliser une lame de scie (10).

6. Appareil selon l'une des revendications 1 à 5, **caractérisé en ce que** chaque tête de maintien (32, 36) comprend une ventouse (54) pour immobiliser une plaque intermédiaire (12).

7. Appareil selon l'une des revendications 1 à 6, **caractérisé en ce que** l'une au moins des têtes de maintien (32, 36) comprend un poussoir (62) pour pousser sur une lame de scie (10). r

8. Appareil selon la revendication 7, **caractérisé en ce qu'**au moins une tête de maintien (32) dotée d'un poussoir (62) comporte un capteur (64) qui surveille la position du poussoir (62).

9. Appareil selon l'une des revendications 1 à 8, **caractérisé en ce qu'**au moins une des têtes de maintien (32, 36) comporte un capteur (64), capable de faire une distinction entre une lame de scie (10) et une plaque intermédiaire (12).
